# FASCICULE DE BREVET EUROPEEN

(11) **EP 1 697 271 B1**
(45) Date de publication et mention de la délivrance du brevet: **04.07.2007**
(21) Numéro de dépôt: 04816570.8
(22) Date de dépôt: 16.12.2004
(51) Int. Cl.: C04B 5/06

(54) **COMPOSITION MINERALE HYDRAULIQUE ET SON PROCEDE DE FABRICATION PRODUITS CIMENTAIRES ET LIANTS HYDRAULIQUES CONTENANT UNE TELLE COMPOSITION**
HYDRAULISCHE MINERALZUSAMMENSETZUNG, HERSTELLUNGSVERFAHREN DAFÜR UND HYDRAULISCHE BINDEMITTEL UND ZEMENTPRODUKTE, DIE EINE DERARTIGE ZUSAMMENSETZUNG ENTHALTEN
HYDRAULIC MINERAL COMPOSITION, PRODUCTION METHOD THEREOF AND HYDRAULIC BINDERS AND CEMENTITIOUS PRODUCTS CONTAINING ONE SUCH COMPOSITION

(30) Priorité: 18.12.2003 FR 0351118
(43) Date de publication de la demande: 06.09.2006
(73) Titulaire: LAFARGE, 75116 Paris (FR)
(72) Inventeur: SORRENTINO, François, F-69330 Meyzieu (FR); GIMENEZ, Michel, F-38790 Diemoz (FR)
(74) Mandataire: Catherine, Alain
(86) Numéro de dépôt international: PCT/FR2004/050717
(87) Numéro de publication internationale: WO 2005/061406

(56) Documents cités:
- WO-A-03/068700
- DD-A- 104 282
- US-A- 4 605 443
- US-A- 4 756 761
- PATENT ABSTRACTS OF JAPAN vol. 1998, no. 13, 30 novembre 1998 (1998-11-30) & JP 10 218654 A (CHICHIBU ONODA CEMENT CORP), 18 août 1998 (1998-08-18)

## Description

La présente invention concerne d'une manière générale une composition minérale hydraulique, susceptible d'être obtenue à partir de laitiers, notamment d'aciérie, et de poussières de fours industriels et de centrales thermiques (cendres volantes) qui présentent un indice d'activité (IA) accru ainsi que son procédé de fabrication.

Plus particulièrement, l'invention porte sur la mise au point d'une nouvelle composition hydraulique, pouvant se substituer au clinker, économique à fabriquer et ayant un indice d'activité accru, basée sur l'incorporation dans une matrice à base de silicoaluminates de calcium et de magnésium d'oxydes minéraux et, éventuellement d'halogénures minéraux, spécifiques afin d'accroître la teneur totale en ces oxydes minéraux et éventuels halogénures minéraux au-delà d'un seuil minimal fixé.

La plupart des ciments actuellement industrialisés sont composés de CaO, SiO₂, Al₂O₃, Fe₂O₃, MgO, SO₃ et à moindre pourcentage K₂0, Na₂O, TiO₂. L'absence de diagramme de phase incluant tous ces oxydes a conduit à représenter ces ciments dans un diagramme simplifié CaO, SiO₂, Al₂O₃, MgO, oxydes de fer ou en simplifiant encore CaO, SiO₂, Al₂O₃, qui sont les oxydes les plus importants en pourcentage. Ces ciments sont ceux de la catégorie des ciments Portland (à base de silicates de calcium), des ciments alumineux (à base d'aluminates de calcium), des sulfo-aluminates de calcium.

Pour modifier les propriétés de ces ciments ainsi que pour des raisons économiques ou environnementales, il est possible de substituer au ciment des produits qui ne sont pas hydrauliques en eux-mêmes (c'est-à-dire qui ne réagissent pas avec l'eau pour donner des hydrates stables et développer des propriétés mécaniques) mais qui, associés à du clinker de ciments Portland, par exemple, vont développer des hydrates stables, et donc des résistances mécaniques ou chimiques durables. Ces produits sont le plus souvent des sous-produits d'autres industries telles que la sidérurgie (laitiers), ou de centrales thermiques de la production d'électricité (cendres volantes). Il est aussi possible d'utiliser des produits naturels tels que les pouzzolanes qui sont essentiellement des silicoaluminates d'origine le plus souvent volcanique.

Ces additions sont limitées en quantité et en qualité par leur origine. Les sous-produits (laitiers, cendres, ...) ont un tonnage et une composition définie par l'activité principale de l'industrie correspondante, les produits naturels (pouzzolanes) par l'existence des ressources naturelles. Dans ce dernier cas, par exemple, le problème peut se résoudre par la fabrication de pouzzolanes artificielles par calcination d'argile de type kaolinite. Dans d'autres cas, le producteur de ciment, s'il veut contrôler la qualité de ces substitutions est amené à acheter ou fabriquer des produits synthétiques. Pour que l'opération soit économiquement rentable, il est souvent nécessaire d'utiliser des sous-produits ou des déchets comme matière première.

C'est le cas du brevet WO 03/068700 dans lequel les auteurs fabriquent un produit dont la composition chimique et minéralogique est similaire à celles des laitiers de haut fourneau. Dans ce cas, ils utilisent essentiellement des poussières de cimenterie et/ou des cendres de charbon comme matières premières. D'autres matières premières telles que laitier d'aciérie ou mâchefer d'incinérateur permettent d'ajuster la composition du produit.

On peut aussi utiliser les cendres de centrale électrique comme décrites dans le brevet US 3,759,730. Ces cendres sont fondues à des températures voisines de 1500°C et le fer métallique est séparé de la phase silicoalumineuse.

JP 10 218654 décrit une composition minérale préparée par fusion et broyage conséquent d'un mélange de laitiers comprenant de 0 à 37 % CaO, de 23 à 90 % SiO₂, de 0 à 40 % Al₂O₃, de 0.1 à 50% d'oxydes minéraux et / ou de 0.1 à 10 % d' halogénures. La composition est obtenue par usage de déchets comme de cendres ou de boues, qui sont soumis à une étape de fusion.

Le problème qui se pose alors est de connaître les compositions chimiques et minéralogiques qui conduiront au meilleur produit, c'est-à-dire celui qui développera les meilleures propriétés, par exemple les meilleures performances, soit mécaniques, soit de résistance à l'agression chimique.

On sait, de par l'art antérieur, que certaines zones de composition dans le diagramme CaO, SiO₂, Al₂O₃, devront présenter un caractère vitreux pour se substituer au ciment. Ceci nécessite l'utilisation d'un procédé de fusion et non de frittage et d'un système de refroidissement d'autant plus rapide que la courbe de viscosité du liquide en fonction de la température sera pentue.

Dans d'autres cas, il est possible d'obtenir des produits vitreux qui sont eux-mêmes hydrauliques et donc ne nécessitent pas l'addition de ciment. Ceci a été développé dans le brevet US 4,605,443 qui définit une zone dans le diagramme CaO/Al₂O₃/SiO₂ permettant d'obtenir des ciments. La zone est définie par CaO entre 44,82 et 52,90, SiO₂ entre 13,42 et 18,1%, Al₂O₃ entre 29,85 et 32,87, et des éléments tels que TiO₂, K₂O, Na₂O, ZrO₂ compris entre 0,21 et 4,18%.

Dans certaines parties du diagramme, qui correspond aux ciments industriels (Portland ou alumineux), il n'est pas utile d'avoir un pourcentage de verre élevé, car les minéraux formés - si licates di et tricalciques, aluminates de calcium - sont déjà des produits hydrauliques.

Dans le cas du silicate tricalcique, un refroidissement rapide est néanmoins nécessaire pour éviter sa décomposition en silicate dicalcique qui, lui, a une moins bonne réactivité.

Pour avoir les meilleures performances des ciments, il est nécessaire de savoir dans quelle zone de composition chimique et minéralogique on doit se trouver.

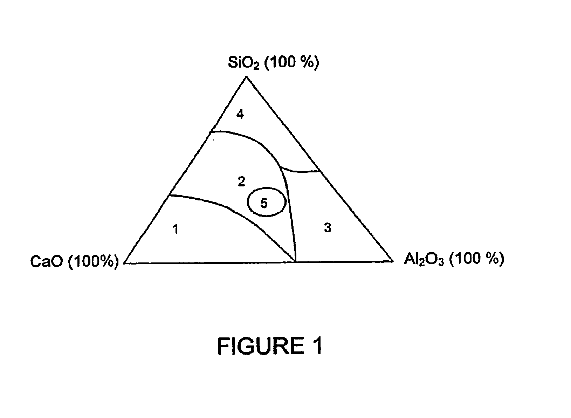

La figure 1est un diagramme simplifié CaO, SiO₂, Al₂O₃-

Comme le montre la figure 1, on peut diviser le diagramme simplifié CaO, SiO₂, Al₂O₃, en plusieurs zones.

La zone 1 qui va s'étendre des teneurs SiO₂ inférieures à 35% et Al₂O₃ inférieures à 70% en poids. Cette zone correspond aux ciments industriels, Portland et Alumineux. Ils sont essentiellement composés de phases cristallines (silicates di et tricalciques : C2S et C3S, aluminates de calcium : C3A, C12A7, CA).

La zone 2 inclut les laitiers de haut-fourneau (sous-produit de l'industrie de la fonte) dont la structure vitreuse causée par un refroidissement rapide les rend potentiellement hydraulique. Cette zone inclut aussi les compositions qui apparaissent dans le brevet US 4,605,443 déjà cité (zone 5).

La zone 4 correspond aux produits pouzzolaniques (pouzzolanes naturelles ou artificielles, cendres volantes etc...). Ces produits ont aussi une meilleure réactivité lorsqu'ils sont amorphes. La zone 3 correspond à des produits à haute température de fusion et dont l'activité hydraulique est très faible.

Pourquoi dans certaines zones, les produits cristallisés sont-ils meilleurs ? Pourquoi dans d'autres zones, est-il nécessaire d'avoir un produit vitreux ? Ces questions se sont posées au cimentier au cours des dernières années.

Des progrès ont été accomplis dans ces domaines, mais pas suffisamment pour avoir une connaissance et accéder à une optimisation complète du système.

Le brevet US 2003/0075019 décrit la production d'un laitier contenant d'abord FeO=1,1%, MnO=0,8% et Cr₂O₃ = 0,3% par réduction d'un laitier d'aciérie par le carbone, et ensuite en utilisant un agent réducteur plus puissant, celle d'un laitier contenant FeO=0,8%, MnO=0,4% et Cr₂O₃=0,07 Les auteurs revendiquent un laitier ayant un maximum de Cr₂O₃ ou de NiO de 0,15 ou 0,08%.

L'objectif du sidérurgiste est de récupérer un maximum de Cr et Ni dans le métal liquide, même si c'est au dépend de la qualité de la phase minéralogique.

Au contraire, l'objectif de la présente invention est de maintenir une quantité relativement importante d'oxydes minéraux et une qualité appropriée de la phase minéralogique.

La présente invention a donc pour objet de fournir une composition minérale hydraulique ayant un indice d'activité accru.

La présente invention a également pour objet de fournir un procédé de fabrication d'une telle composition, et de préférence en utilisant comme matières premières des sous-produits industriels tels que les laitiers, notamment d'aciérie, les cendres volantes et les boues d'épuration calcinées.

La présente invention a encore pour objet des produits cimentiers et des liants hydrauliques contenant une telle composition minérale hydraulique.

Selon l'invention, on a trouvé qu'en maintenant dans une matrice à base de silicoaluminate de calcium et de magnésium la proportion totale de certains oxydes minéraux et, éventuellement, certains hologénures minéraux, à une valeur d'au moins 5% par rapport au poids de la composition, on obtenait une composition minérale hydraulique ayant un indice d'activité accru.

Plus précisément, la composition minérale hydraulique selon l'invention comprend une matrice à base de silicoaluminates de calcium et magnésium, vitreuse ou cristallisée, représentant au moins 25%, de préférence au moins 30%, en poids de la composition, un ou plusieurs oxydes minéraux et éventuellement un ou plusieurs halogénures minéraux spécifiques choisis parmi les oxydes et halogènures de Ti, V, Cr, Mn, Co, Ni, Cu, Pb, Ba, Sr, P, S, Na, K, Zr, Mo, Be, TI, As, Sn et Cd représentant au moins 5% en poids de la composition, au plus 31% en poids d'alumine (Al₂O₃), moins de 10% en poids de ferrite et moins de 0,05%, de préférence moins de 0,01 %, en poids de C par rapport au poids de la composition.

La ferrite est une alumino ferrite de calcium qui correspond généralement à un taux d'oxydes de fer dans la composition de 0,3 à 5% en poids.

Par composition minérale hydraulique, on entend, dans la présente invention, une composition essentiellement constituée de composés minéraux qui réagit avec l'eau pour donner un produit comportant des hydrates stables et qui développe des propriétés mécaniques stables dans le temps, en particulier qui a peu de variations dimensionnelles (expansion, entre autres...).

Par matrice vitreuse, on entend, dans la présente invention, des matrices à base de silico-aluminates de calcium et magnésium comportant une phase vitreuse représentant au moins 80%, de préférence au moins 85% en poids de la matrice.

Les matrices cristallines des compositions minérales hydrauliques de l'invention correspondent de préférence à des compositions minéralogiques comprenant par rapport au poids total de la matrice :
Composition minéralogique A,
   - silicate dicalcique (C2S) 5 à 35%, de préférence 10 à 30% ;
   - aluminate monocalcique (CA) 20 à 60%, de préférence 30 à 55% ; et
   - mélilite (solution solide de gehlénite C2AS
      et d'akermanite C2MS2 5 à 50%, de préférence 10 à 40% ;
   ou
Composition minéralogique B,
   - silicate dicalcique (C2S) 20 à 60%, de préférence 20 à 50% ;
   - aluminate de calcium (C12A7) 20 à 70%, de préférence 20 à 60% ; et
   - aluminate de calcium (C3A) 0 à 45%, de préférence 0 à 40%.

En outre, la composition minéralogique A peut comporter de préférence jusqu'à 5%, mieux jusqu'à 0,5% en poids de FeO, jusqu'à 10%, mieux de 3 à 8% de MgO et de 0 à 8% de périclase, cependant que la composition minéralogique B peut comporter de préférence jusqu'à 10%, mieux jusqu'à 8% en poids de FeQ, jusqu'à 10%, mieux 2 à 5% de MgO et de la périclase de 0 à 8%.

En ce qui concerne les matrices vitreuses, comme indiqué précédemment, elles comportent au moins 80% en poids par rapport au poids total de la matrice d'une phase vitreuse. Bien évidemment, il n'est pas possible de définir ces phases vitreuses par des phases minéralogiques.

Néanmoins, il est possible de les définir par des compositions minéralogiques potentielles, c'est-à-dire les compositions minéralogiques qui seraient obtenues si, lors de la fabrication de ces compositions minérales hydrauliques de l'invention, on procédait à un refroidissement lent, de manière à obtenir une composition à matrice cristalline et non à un refroidissement rapide (trempe) conduisant à une composition à matrice essentiellement vitreuse. Ainsi, on peut définir les matrices vitreuses selon l'invention comme des matrices qui auraient potentiellement, par rapport au poids total de la matrice, les compositions minéralogiques suivantes :
Composition minéralogique A,
   - mélilite (C2AS/C2MS2) 10 à 60% ;
   - silicate dicalcique (C2S) 15 à 80% ;
   - merwinite (C3MS2) 3 à 15% ; et
   - oxydes de fer (FeO/Fe2O3) 0,5 à 5% ;
   ou :
Composition minéralogique B,
   - silicate dicalcique (C2S) 5 à 75% ;
   - mélilites (C2AS/C2MS2) 5 à 50% ;
   - aluminate monocalcique (CA) 10 à 45% ;
   - oxydes de fer (FeO/Fe2O3) 5 à 20% ;
   - périclase 2 à 10%.

De préférence, les oxydes minéraux spécifiques sont présents dans la composition minérale hydraulique de l'invention dans les proportions pondérales suivantes, pour autant que le total de ces oxydes minéraux et des halogénures éventuels représentent au moins 5% en poids de la composition :
- oxyde de titane 0 à 10%, de préférence 0,1 à 10% ;
- oxyde de vanadium 0 à 0,5%, de préférence 0,2 à 0,5% ;
- oxyde de chrome 0 à 0,5% ;
- oxyde de manganèse 0 à 5%, de préférence 0,5 à 5% ;
- oxyde de zinc 0 à 2%, de préférence 0,1 à 2% ;
- oxyde de cobalt 0 à 0,05%, de préférence 0,01 à 0,5% ;
- oxyde de nickel 0 à 0,5%, de préférence 0,01 à 0,5% ;
- oxyde de cuivre 0 à 2% ; de préférence 0,1 à 2% ;
- oxyde de plomb 0 à 0,01%, de préférence 0,001 à 0,01% ;
- oxyde de baryum 0 à 2%, de préférence 0,1 à 2% ;
- oxyde de strontium 0 à 2% ; de préférence 0,1 à 2% ;
- oxyde de phosphore 0 à 2%, de préférence 0,1 à 2% ;
- oxyde de soufre 0 à 3%, de préférence 0,2 à 3% ;
- oxyde de sodium 0 à 10%, de préférence 0,5 à 10%;
- oxyde de potassium 0 à 10%, de préférence 0,5% à 10% ;
- oxyde de zirconium 0 à 0,1%, de préférence 0,01 à 0,1% ;
- oxyde de molybdène 0 à 0, 1 %, de préférence 0,01 à 0,1 % ;
- oxyde de thallium 0 à 0,1% ; de préférence 0,01 à 0,1% ;
- oxyde d'étain 0 à 0,1%, de préférence 0,01 à 0,1% ;
- oxyde de cadmium 0 à 0,005%, de préférence 0,0002 à 0,005% ; et
- oxyde d'arsenic 0 à 0,002%, de préférence 0,0001 à 0,002%.

De préférence, les compositions selon l'invention comprennent des oxydes de sodium, potassium, chrome, nickel, cobalt, phosphore, zinc, soufre, titane, baryum, manganèse et strontium.

De préférence encore, les compositions selon l'invention contiennent à la fois au moins les oxydes spécifiques des éléments suivants : S, Ti, Mn, Ba, Sr, Zn.

Comme indiqué, outre les oxydes minéraux spécifiques, la composition peut comprendre des halogénures, de préférence des chlorures, fluorures et iodures correspondant aux oxydes minéraux listés.

De préférence, ces halogénures sont présents à raison de 0.1 à 2% en poids.

De préférence, lorsque les compositions de l'invention ont une matrice cristalline, les oxydes minéraux et éventuels halogénures spécifiques représentent au plus 7% du poids total de la composition.

De préférence également, lorsque la matrice des compositions de l'invention est vitreuse, les oxydes minéraux et éventuels halogénures spécifiques représentent au plus 15% du poids total de la composition.

L'invention concerne également un procédé de fabrication des compositions selon l'invention.

De manière générale, ce procédé comprend :
(a) l'obtention d'un matériau capable de former une matrice à base de silicoaluminate de calcium et magnésium dans une proportion d'au moins 25%, de préférence d'au moins 30% en poids de la composition minérale hydraulique finale et contenant une quantité d'oxydes minéraux et, éventuellement d'halogènures minéraux, tels que définis précédemment, suffisante ou insuffisante pour obtenir dans la composition minérale hydraulique finale une proportion d'au moins 5% en poids de la composition finale de ces oxydes minéraux et, éventuellement, halogénures minéraux ;
(b)l'ajout au matériau capable de former la matrice, lorsque celui-ci a une teneur insuffisante en oxydes minéraux et halogénures minéraux éventuels d'un matériau additionnel contenant une quantité d'oxydes minéraux et, éventuellement, d'halogénures minéraux spécifiques, tels que définis précédemment, suffisante pour obtenir dans la composition minérale hydraulique finale une proportion d'au moins 5% en poids de ces oxydes minéraux et, éventuels halogénures minéraux ;
(c)la fusion du matériau de l'étape (a) lorsque celui-ci a une teneur suffisante en oxydes minéraux et éventuels halogénures minéraux ou du produit obtenu à l'étape (b) à une température de 1450°C à 1650°C, de préférence à une température d'au moins 1500°C, et mieux d'au moins 1550°C dans une atmosphère réductrice ayant une pression partielle en oxygène égale ou inférieure à 10⁻⁷ atmosphère, de préférence telle que 10⁻⁷ ≤ pO₂ ≤ 10⁻⁵ atmosphère, et
(d) la récupération de la composition minérale hydraulique finale.

La récupération de la composition minérale hydraulique finale pourra se faire par refroidissement rapide (trempe), par exemple à l'eau ou à l'air pour obtenir une matrice vitreuse ou par refroidissement lent pour obtenir une matrice cristallisée. Bien évidemment, le choix du refroidissement rapide ou lent dépendra de la composition chimique et minéralogique des matières premières afin d'assurer l'obtention de la composition minérale hydraulique finale de l'invention.

Le matériau capable de former une matrice à base de silicoaluminate de calcium et magnésium peut être tout matériau permettant d'obtenir dans la composition une telle matrice, en particulier les bauxites, et de préférence des sous-produits industriels, en particulier de l'industrie sidérurgique comme les laitiers, notamment les laitiers d'aciérie, ou des centrales thermiques de production d'électricité comme les cendres volantes ou d'autres industries telles que les boues d'épuration calcinées, les poussières de four et fines de carrière de la cimenterie et les poussières de filtration telles que les poussières de filtres d'aciérie.

A titre indicatif, on a indiqué en % en poids, dans les tableaux I, II, III et IV, les compositions minéralogiques et/ou chimiques usuelles des laitiers d'aciérie, des cendres volantes, des bauxites et des boues d'épuration calcinées.

**TABLEAU 1 - Laitiers d'aciérie**

| Matière première 1( laitier d'acièrie) | | | | | | | | | | |
|---|---|---|---|---|---|---|---|---|---|---|
| | C2S | Ferrite | CaO libre | Wustite | Periclase | C | TiO2 | V2O5 | Cr2O3 | MnO |
| Min | 15 | 10 | 1 | 3 | 2 | 0,02 | 0,3 | 0,2 | 0,20 | 0,5 |
| Max | 40 | 50 | 15 | 20 | 15 | 0,3 | 1,5 | 0,5 | 20,00 | 10 |
| | ZnO | CoO | NiO | CuO | PbO | BaO | SrO | P2O5 | S | Na2O |
| Min | 0,01 | 0,0001 | 0,01 | 0,005 | 0,0001 | 0,001 | 0,001 | 0,05 | 0,01 | 0,05 |
| Max | 0,5 | 0,001 | 0,5 | 0,5 | 0,005 | 0,5 | 0,05 | 2 | 2,00 | 0,5 |
| | K2O | ZrO2 | MoO | BeO | TI | Sn2O3 | As2O3 | CdO | Cl | F |
| Min | 0,02 | 0,02 | 0,0001 | 0,0001 | 0 | 0,0001 | 0,0001 | 0,0001 | 0,05 | 0,0001 |
| Max | 0,5 | 0,5 | 0,001 | 0,001 | 0,0005 | 0,2 | 0,005 | 0,05 | 2,00 | 0,5 |

**TABLEAU II- Cendres volantes**

| Matière première 2 (cendres volantes) | | | | | | | | | | |
|---|---|---|---|---|---|---|---|---|---|---|
| | CaO | SiO2 | Al2O3 | MgO | Fe2O3 | C | TiO2 | V2O5 | Cr2O3 | MnO |
| Min | 0,4 | 14 | 4 | 0,5 | 2 | 0,5 | 0,5 | 0 | 0,00 | 0 |
| Max | 40 | 65 | 35 | 10 | 20 | 26 | 4 | 0,5 | 0,10 | 0,5 |
| | ZnO | CoO | NiO | CuO | PbO | BaO | SrO | P2O5 | S | Na2O |
| Min | 0 | 0 | 0 | 0 | 0 | 0 | 0 | 0,1 | 0,00 | 0,04 |
| Max | 0,2 | 0,05 | 0,15 | 0,03 | 0,3 | 2 | 2 | 2 | 8,00 | 11 |
| | K2O | ZrO2 | MoO | BeO | TI | Sn2O3 | As2O3 | CdO | Cl | F |
| Min | 0,1 | 0 | 0 | 0 | 0 | 0 | 0 | 0 | 0,00 | 0 |
| Max | 5 | 0,1 | 0,05 | 0,05 | 0,05 | 0,05 | 0,1 | 5 | 0,50 | 0,5 |

**TABLEAU III - Bauxites**

| Matière première 3 (Bauxite) | | | | | | | | | | |
|---|---|---|---|---|---|---|---|---|---|---|
| | CaO | SiO2 | Al2O3 | MgO | Fe2O3 | C | TiO2 | V2O5 | Cr2O3 | MnO |
| Min | 0,2 | 0 | 30 | 0 | 0 | 0 | 0,02 | 0 | 0,00 | 0 |
| Max | 10 | 35 | 80 | 2 | 35 | 2 | 5 | 1 | 2,00 | 2 |
| | ZnO | CoO | NiO | CuO | PbO | BaO | SrO | P2O5 | S | Na2O |
| Min | 0 | 0 | 0 | 0 | 0 | 0 | 0 | 0,1 | 0,00 | 0,04 |
| Max | 3 | 0,03 | 0,15 | 0,03 | 0,3 | 2 | 2 | 2 | 6,00 | 5 |
| | K2O | ZrO2 | MoO | BeO | TI | Sn2O3 | As2O3 | CdO | Cl | F |
| Min | 0,1 | 0 | 0 | 0 | 0 | 0 | 0 | 0 | 0,00 | 0 |
| Max | 5 | 0,1 | 0,05 | 0.05 | 0,05 | 0,05 | 0,1 | 1 | 1,50 | 0,25 |

**TABLEAU IV - Boues d'épuration calcinées**

| Matière première 4 (boues d'épuration calcinées) | | | | | | | | | | |
|---|---|---|---|---|---|---|---|---|---|---|
| | CaO | SiO2 | At2O3 | MgO | Fe2O3 | C | TiO2 | V2O5 | Cr2O3 | MnO |
| Min | 20 | 10 | 5 | 0 | 2 | 0 | 0,02 | 0 | 0,20 | 0 |
| Max | 30 | 35 | 20 | 5 | 15 | 2 | 5 | 0,5 | 2,00 | 2 |
| | ZnO | CoQ | NiO | CuO | PbO | BaO | SrO | P2O5 | S | Na2O |
| Min | 0 | 0 | 0 | 0 | 0 | 0 | 0 | 0,1 | 0,50 | 0,04 |
| Max | 3 | 0,03 | 0,15 | 0,5 | 0,5 | 2 | 1 | 5 | 10,00 | 5 |
| | K2O | ZrO2 | MoO | BeO | TI | Sn2O3 | As2O3 | CdO | Cl | F |
| Min | 0,1 | 0 | 0 | 0 | 0 | 0 | 0 | 0 | 0,00 | 0 |
| Max | 5 | 0,3 | 0,05 | 0,05 | 0,05 | 0,05 | 0,1 | 1 | 1,50 | 0,25 |

On a constaté que le carbone imbrulé dans le matériau capable de former la matrice à base d'aluminate de calcium et de magnésium et des matériaux, éventuellement ajoutés pour compléter la teneur en minéraux spécifiques, en particulier les cendres volantes, a un rôle primordial dans le processus de réduction du procédé de l'invention. En effet, ce carbone résiduel contenu dans le matériau a un pouvoir réducteur limité (en terme de cinétique de réduction des oxydes métalliques) mais a le pouvoir de maintenir le milieu localement réducteur, ce qui empêche la présence d'oxydes métalliques à hauts degrés d'oxydation et permet ainsi de contrôler le passage en solution de certains oxydes, en particulier de Cr VI.

Ainsi, de préférence, on maintient à une valeur de 0,05 à 5 le rapport pondéral du carbone imbrûlé présent dans le matériau capable de former la matrice et les matériaux ajoutés éventuels au carbone de l'agent réducteur rajouté dans le procédé, par exemple charbon ou anthracite, pour réaliser l'atmosphère réductrice.

Le poids du carbone imbrûlé présent dans le matériau capable de former la matrice et les matériaux ajoutés éventuels peut être déterminé par la mesure de la perte au feu (LOI) de ces matériaux.

Le carbone de l'agent réducteur peut être déterminé par des méthodes d'analyse du carbone (appareil Leco, par exemple).

La perte au feu (LOI) est la variation de poids (le plus souvent la perte) d'un échantillon que l'on porte à 975°C dans l'air (norme EN 1962). Dans certains cas, on peut faire cette mesure dans un gaz neutre (pour éviter l'oxydation).

La fusion du matériau capable de former la matrice silicoalumineuse de l'invention s'effectue à une température d'au moins 1450°C, de préférence d'au moins 1500°C, et mieux d'au moins 1550°C, mais inférieure à 1650°C pour éviter une volatilisation des oxydes spécifiques.

En outre, cette fusion s'effectue dans une atmosphère réductrice contrôlée ayant une pression partielle d'oxygène égale ou inférieure à 10⁻⁵ atmosphère, de préférence telle que 10⁻⁷≤ pO₂ ≤ 10⁻⁵ atmosphère, pour éviter une réduction complète des oxydes.

Comme indiqué précédemment, deux cas peuvent se présenter pour la fabrication de la composition de l'invention selon la matière première capable de former la matrice silico-alumineuse.

Dans un premier cas, cette matière première contient déjà une quantité suffisante des oxydes et éventuels halogénures spécifiques pour obtenir la teneur finale voulue, et il suffit alors de procéder au traitement de fusion en atmosphère réductrice contrôlée selon l'invention pour obtenir la composition hydraulique finale.

Dans un deuxième cas, la matière première ne contient pas suffisamment d'oxydes et éventuels halogénures pour obtenir la teneur finale voulue, et alors on ajoute préalablement à la fusion ou pendant la fusion de la matière première un matériau additionnel contenant une quantité d'oxydes minéraux et, éventuellement d'halogènures minéraux, spécifiques suffisante pour obtenir dans la composition minérale hydraulique finale une proportion d'au moins 5% en poids de ces oxydes minéraux et éventuels halogénures minéraux.

Ce matériau additionnel peut être tout matériau contenant un ou plusieurs des oxydes minéraux et éventuels halogènures minéraux spécifiques, qui ne nuit pas aux propriétés hydrauliques de la composition finale, et en particulier des résidus de la sidérurgie, des centrales thermiques, des cimenteries et de l'industrie chimique.

Les compositions minérales hydrauliques selon l'invention peuvent être utilisées telles quelles comme ciment ou liant hydraulique ou elles peuvent être combinées avec tous produits cimentaires et liants hydrauliques, tels que ciments Portland, ciments alumineux, plâtres naturels et synthétiques, phosphogypse et leurs mélanges.

En général, elles peuvent être combinées avec ces produits cimentaires et liants hydrauliques jusqu'à 80% en poids, de préférence 50% en poids, par rapport au poids total du produit obtenu.

Les exemples suivants, non limitatifs, illustrent la présente invention.

Dans les exemples, sauf indication contraire, tous les pourcentages et quantités sont exprimées en poids.

### Exemple 1 :

Les deux matières premières de compositions chimiques et minéralogiques figurant dans le tableau V suivant ont été mélangées en proportion 70/30. La première est un résidu de la fabrication de l'acier, la deuxième un résidu de centrale électrique.

La matrice silicoalumineuse est produite par fusion à 1550°C en atmosphère confinée pour garder une partie des oxydes minéraux des matières premières. Une trempe à l'eau permet de maintenir la matrice à l'état vitreux > 86%. Une trempe à l'air permet d'obtenir la matrices l'état vitreux (taux de verre égal à 86%).

Les compositions minéralogiques et chimiques de la composition finale ainsi que d'une composition témoin sont également données dans le tableau V.

**TABLEAU V**

| Matière première 1 laitier d'acièrie | | | | | | | | | |
|---|---|---|---|---|---|---|---|---|---|
| C2S | Ferrite | CaOL | Wustite | Periclase | C | TiO2 | V2O5 | Cr2O3 | MnO |
| 40,13 | 20,84 | 10,52 | 13,81 | 5,2 | 0,09 | 0,59 | 0,345 | 0,88 | 4,73 |
| ZnO | CoO | NiO | CuO | PbO | BaO | SrO | P2O5 | S | Na2O |
| 0,03 | 0,0005 | 0,025 | 0,014 | 0,002 | 0,06 | 0,02 | 1,26 | 0,09 | 0,18 |
| K2O | ZrO2 | MoO | BeO | TI | Sn2O3 | As2O3 | CdO | Cl | F |
| 0,05 | 0,03 | 0,0003 | 0,0004 | 0,0001 | 0,007 | 0,002 | 0,003 | 1,08 | 0,011 |

| Matière première 2 cendres votantes | | | | | | | | | |
|---|---|---|---|---|---|---|---|---|---|
| Verre | quartz | | | Périclase | C | TiO2 | V2O5 | Cr203 | MnO |
| 82 | 2 | | | 5 | 5,83 | 0,92 | 0,06 | 0,01 | 0,1 |
| ZnO | CoO | NiO | CuO | PbO | BaO | SrO | P2O5 | S | Na2O |
| 0,04 | 0,003 | 0,043 | 0,021 | 0,02 | 0,05 | 0,02 | 0,35 | 0,14 | 0,62 |
| K2O | ZrO2 | MaO | BeO | TI | Sn2O3 | As2O3 | CdO | Cl | F |
| 2,49 | 0,019 | 0,0003 | 0,0004 | 0,0001 | 0,01 | 0,007 | 0,02 | 0,2162 | 0,01 |

| Produit final | | | | | | | | | |
|---|---|---|---|---|---|---|---|---|---|
| Verre | Merwinite | Melilite | FeO | Periclase | C | TiO2 | V2O5 | MnO | Cr2O3 |
| 86 | 2,63 | 3,1 | 0,82 | 1,8 | 0 | 0,7234 | 0,3413 | 1,3416 | 0.1973 |
| ZnO | CoO | NiO | CuO | PbO | BaO | srO | P2O5 | S | Na2O |
| 0,0329 | 0.0016 | 0,0132 | 0,0193 | 0,0456 | 0,075 | 0.0263 | 1,2982 | 0.1381 | 0,1998 |
| K2O | ZrO2 | MoO | BeO | TI | Sn2O3 | As2O3 | CdO | Cl | F |
| 1,0259 | 0,0351 | 0,0004 | 0,0005 | 0,0001 | 0,0111 | 0,0013 | 0,0026 | 0,1052 | 0,0142 |

| Témoin | | | | | | | | | |
|---|---|---|---|---|---|---|---|---|---|
| Verre | Merwinite | Melilite | FeO | Periclase | CO2 | TiO2 | V2O5 | MnO | Cr2O3 |
| 89 | 1,63 | 4 | 1,5 | 0,9 | 0,3 | 0,49 | 0,05 | 0,39 | 0,01 |
| ZnO | CoO | NiO | CuO | PbO | BaO | SrO | P2O5 | S | Na2O |
| 0,01 | 0,0008 | 0.005 | 0,0006 | 0,005 | 0,05 | 0,023 | 0.01 | 0,96 | 0,276 |
| K2O | ZrO2 | MoO | BeO | TI | Sn2O3 | As2O3 | CdO | Cl | F |
| 0,38 | 0,003 | 0,0003 | 0 | 0 | 0,006 | 0,0003 | 0 | 0 | 0 |

La composition finale obtenue a été broyée à 4500 cm²/g et l'indice de réactivité (ASTM C 989) a été mesuré.

La même mesure a été effectuée sur une matrice silicoalumineuse contenant moins de 3% d'éléments mineurs (témoin).

Le tableau VI suivant donne les résultats.

**TABLEAU VI - Indice d'activité I.A.**

| | % oxydes minéraux et éventuels halogénure s | I.A 1jour | I.A.2jours | I.A. 7 jours | I.A.28 jours |
|---|---|---|---|---|---|
| Invention | 6,89 % | 46 | 62 | 88 | 105 |
| Témoin | 2,97 % | 41 | 50 | 78 | 93 |

### Exemple 2 :

On a fabriqué des compositions selon l'invention ayant une matrice à base de C2S, CA, C2AS (N°1 et 2 du tableau VI) ou de C2S, C12A7 (N°3 tableau VI) ou de C2S, C12A7, C3A (N°4, 5, 6 du tableau VIII) par fusion à 1500°C et cristallisation par refroidissement lent d'un mélange de laitier, de bauxite et de chaux.

Les compositions chimiques du laitier et de la bauxite sont données dans le tableau VII.

Les proportions de laitier, bauxite et chaux utilisées, ainsi que les compositions chimiques et minéralogiques des compositions finales selon l'invention figurent dans le tableau VIII.

**TABLEAU VII**

| | LAITIER | BAUXITE |
|---|---|---|
| | | |
| SiO2 | 14,00 | 11,69 |
| CaO | 45,54 | 4,39 |
| Al2O3 | 1,16 | 57,75 |
| Fe2O3 | 24,61 | 21,60 |
| MgO | 5,20 | 0,43 |
| C | 0,09 | 0,00 |
| S | 0,09 | 0,08138 |
| MnO | 4,73 | 0,25575 |
| Cr2O3 | 0,88 | 0,23250 |
| TiO2 | 0,59 | 2,72030 |
| K2O | 0,05 | 0,16275 |
| Na2O | 0,18 | 0,16275 |
| P2O5 | 1,26 | 0,13950 |
| ZrO2 | 0,03 | 0,02000 |
| SrO | 0,02 | 0,00200 |
| V2O5 | 0,345 | 0,12788 |
| BaO | 0,06 | 0,11625 |
| Cl | 1,08 | 0,05000 |
| F | 0,01 | 0,00600 |
| CuO | 0,012 | 0,00500 |
| CdO | 0,003 | 0,00010 |
| ZnO | 0,03 | 0,02500 |
| Sn2O3 | 0,0078 | 0,00550 |
| As2O3 | 0,0002 | 0,00010 |
| NiO | 0,02 | 0,01500 |
| PbO | 0,002 | 0,00120 |

**TABLEAU VIII**

| | N°1 | N°2 | N°3 | N°4 | N°5 | N°6 |
|---|---|---|---|---|---|---|
| Laitier | 32 | 28 | 15 | 16 | 45 | 72 |
| Bauxite | 53 | 53 | 47 | 45 | 35 | 22 |
| Chaux | 14 | 19 | 38 | 39 | 20 | 6 |
| C2S | 14,0 | 28,2 | 30,7 | 23,4 | 36,8 | 47,1 |
| CA | 37,7 | 51,8 | | | | |
| C2AS | 36,0 | 10,0 | | | | |
| C12A7 | | | 58,7 | 27,0 | 38,6 | 26,2 |
| C3A | | | | 39,7 | 14,4 | 13,1 |
| Fe2O3 | 0,4210 | 0,4210 | 1,4883 | 0,9012 | 0,9008 | 4,9056 |
| MgO | 5,9533 | 4,0733 | 4,0342 | 3,8860 | 2,9963 | 2,5556 |
| S | 0,4377 | 0,2663 | 0,5623 | 0,6452 | 0,2490 | 0,2214 |
| MnO | 0,7093 | 0,6110 | 0,9923 | 0,1985 | 1,7725 | 0,8267 |
| Cr2O3 | 0,2868 | 0,3290 | 0,0331 | 0,4467 | 0,2783 | 0,3100 |
| TiO2 | 2,6713 | 2,7261 | 2,4312 | 2,1588 | 1,9629 | 1,9781 |
| K2O | 0,1811 | 0,1567 | 0,1323 | 0,2481 | 0,1465 | 0,1476 |
| Na2O | 0,0453 | 0,0157 | 0,0000 | 0,0248 | 0,0293 | 0,0590 |
| P2O5 | 0,1509 | 0,0783 | 0,0662 | 0,0248 | 0,2197 | 0,1771 |
| ZrO2 | 0,1056 | 0,1097 | 0,0992 | 0,0993 | 0,0586 | 0,0590 |
| srO | 0,0604 | 0,0627 | 0,0496 | 0,0744 | 0,0439 | 0,0443 |
| V2O5 | 0,3319 | 0,3149 | 0,2064 | 0,3176 | 0,3674 | 0,5458 |
| BaO | 0,1505 | 0,1502 | 0,1174 | 0,1744 | 0,1243 | 0,1357 |
| Cl | 0,6931 | 0,6300 | 0,3423 | 0,5501 | 0,9248 | 1,5565 |
| F | 0,0119 | 0,0115 | 0,0080 | 0,0121 | 0,0121 | 0,0168 |
| CuO | 0,0121 | 0,0115 | 0,0077 | 0,0117 | 0,0131 | 0,0192 |
| CdO | 0,0019 | 0,0017 | 0,0009 | 0,0015 | 0,0025 | 0,0043 |
| ZnO | 0,0464 | 0,0411 | 0,0305 | 0,0452 | 0,0402 | 0,0460 |
| Sn2O3 | 0,0101 | 0,0098 | 0,0069 | 0,0109 | 0,0100 | 0,0135 |
| As2O3 | 0,0002 | 0,0002 | 0,0001 | 0,0002 | 0,0002 | 0,0003 |
| NiO | 0,0267 | 0,0260 | 0,0185 | 0,0280 | 0,0262 | 0,0349 |
| PbO | 0,0024 | 0,0023 | 0,0016 | 0,0024 | 0,0024 | 0,0034 |

Le produit N°1 broyé à 4500 blaine est mélangé à de l'eau (E/C= 0,35) contenant un retardateur (0,1 % en poids de citrate de sodium). Les résistances à la compression sont alors de 5 MPa à 6 heure, 20 MPa à 24 heure.

Le produit N°2 broyé à 4500 blaine est mélangé à de l'eau (E/C= 0,35) contenant un retardateur (0,1% de citrate de sodium). Les résistances à la compression sont alors de 10 MPa à 6 heure, 30 MPa à 24 heure.

Le produit N°3 broyé à 4000 cm2/ g (100 g) est mélangé à du ciment Portland, (100 g) du sable fin (< 40 µm) du calcaire (250 g) de l'anhydrite (125 g) une cellulose (ex Tylose H 300 p de Hoechst) du carbonate de lithium (0,8 g) de l'acide tartrique (1 g) et un adjuvant type melment F10. La demande en eau est de 22 cm3 et le slump est de 155 mm au départ et après 15 minutes. Le mélange a des propriétés autolissantes. Le temps de prise est de 20 minutes et le produit est utilisable pour un carrelage au bout de 2,5 heures

Le produit N°4, broyé à 4500 cm2/g est mélangé à du ciment Portland, de l'anhydrite, du sable fin (< 40 µm) une méthyle cellulose, un alcool polyvinylique, du carbonate de lithium, et du citrate de sodium en proportion (7/25/3/63/0,5/0,2/0,5/0,5). On obtient un temps d'ouvrabilité de 15 minute et un temps de durcissement de 30 minutes.

Le produit N°5, broyé à 4500 cm2/g est mélangé à 40% de laitier industriel de haut-fourneau vitrifié, de l'anhydrite (10%), du sable fin (< 40 µm), du citrate de sodium (0,05%). On obtient de 6 et 24 heures des résistances de 20 et 40 MPa

Le produit N°6, broyé à 4500 cm2/g est mélangé à des cendres volantes (30%) de centrales thermiques (Carling), de l'anhydrite (10%), du sable fin (< 40 µm), du citrate de sodium en proportion (0,2%) .On obtient à 6 et 24 heure des résistances de 15 et 30 MPa.

Le composant Melment F10 est un condensat de polymélanine formaldéhyde vendu par Degussa.

Les résistances à compression ont été mesurées selon la norme : NF EN 196-1.

La prise et la demande en eau ont été mesurées selon la norme : NF EN 196-3.

Le slump a été mesuré selon la norme P18 451.

## Revendications

1. Composition minérale hydraulique, **caractérisée en ce qu'**elle comprend une matrice à base de silicoaluminates de calcium et magnésium, vitreuse ou cristallisée, représentant au moins 25%, de préférence au moins 30%, en poids de la composition, un ou plusieurs oxydes minéraux et éventuellement un ou plusieurs halogénures minéraux spécifiques choisis parmi les oxydes et halogènures de Ti, V, Cr, Mn, Co, Ni, Cu, Pb, Ba, Sr, P, S, Na, K, Zr, Mo, Be, Tl, As, Sn et Cd représentant au moins 5% en poids de la composition, au plus 31% en poids d'alumine (Al₂O₃), moins de 10% en poids de ferrite (alumino ferrite de calcium) et moins de 0,05%, de préférence moins de 0,01 %, en poids de C par rapport au poids de la composition.

2. Composition minérale hydraulique selon la revendication 1, **caractérisée en ce qu'**elle comprend, en % en poids par rapport au poids total de la composition :
- oxyde de titane 0 à 10%, de préférence 0,1 à 10% ;
- oxyde de vanadium 0 à 0,5%, de préférence 0,2 à 0,5% ;
- oxyde de chrome 0 à 0,5% ;
- oxyde de manganèse 0 à 5%, de préférence 0,5 à 5% ;
- oxyde de zinc 0 à 2%, de préférence 0,1 à 2% ;
- oxyde de cobalt 0 à 0,05%, de préférence 0,01 à 0,5% ;
- oxyde de nickel 0 à 0,5%, de préférence 0,01 à 0,5% ;
- oxyde de cuivre 0 à 2% ; de préférence 0,1 à 2% ;
- oxyde de plomb 0 à 0,01%, de préférence 0,001 à 0,01 %;
- oxyde de baryum 0 à 2%, de préférence 0,1 à 2% ;
- oxyde de strontium 0 à 2% ; de préférence 0,1 à 2% ;
- oxyde de phosphore 0 à 2%, de préférence 0,1 à 2% ;
- oxyde de soufre 0 à 3%, de préférence 0,2 à 3% ;
- oxyde de sodium 0 à 10%, de préférence 0,5 à 10% ;
- oxyde de potassium 0 à 10%, de préférence 0,5% à 10% ;
- oxyde de zirconium 0 à 0,1%, de préférence 0,01 à 0,1% ;
- oxyde de molybdène 0 à 0,1%, de préférence 0,01 à 0,1 % ;
- oxyde de thallium 0 à 0,1% ; de préférence 0,01 à 0,1% ;
- oxyde d'étain 0 à 0,1%, de préférence 0,01 à 0,1% ;
- oxyde de cadmium 0 à 0,005%, de préférence 0,0002 à 0,005% ; et
- oxyde d'arsenic 0 à 0,002%, de préférence 0,0001 à 0,002%.

3. Composition minérale hydraulique selon la revendication 1 ou 2, **caractérisée en ce que** les halogénures éventuels sont choisis parmi les chlorures, fluorures et iodures.

4. Composition minérale hydraulique selon l'une quelconque des revendications 1 à 3, **caractérisée en ce que** les oxydes minéraux sont choisis parmi les oxydes de sodium, potassium, chrome, nickel, cobalt, phosphore, zinc, soufre, titane, baryum, manganèse et strontium.

5. Composition minérale hydraulique selon l'une quelconque des revendications 1 à 4, **caractérisée en ce qu'**elle contient, à la fois, au moins les oxydes de soufre, titane, baryum, manganèse, strontium et zinc.

6. Composition minérale hydraulique selon l'une quelconque des revendications précédentes, **caractérisée en ce que** la matrice est une matrice cristallisée et **en ce que** les oxydes minéraux et les éventuels halogènures minéraux spécifiques représentent au plus 7% en poids de la composition.

7. Composition minérale hydraulique selon l'une quelconque des revendications précédentes, **caractérisée en ce que** la matrice est cristallisée et contient, par rapport au poids total de la matrice :
Composition minéralogique A,
- silicate dicalcique (C2S) 5 à 35%, de préférence 10 à 30%;
- aluminate monocalcique (CA) 20 à 60%, de préférence 30 à 55% ; et
- mélilite (solution solide de gehlénite C2AS
et d'akermanite C2MS2) 5 à 50%, de préférence 10 à 40%;
ou
Composition minéralogique B,
- silicate dicalcique (C2S) 20 à 60%, de préférence 20 à 50%;
- aluminate de calcium (C12A7) 20 à 70%, de préférence 20 à 60% ; et
- aluminate de calcium (C3A) 0 à 45%, de préférence 0 à 40%.

8. Produit cimentaire ou liant hydraulique, **caractérisé en ce qu'**il comprend jusqu'à 80% en poids par rapport au poids total du produit obtenu, de préférence jusqu'à 50% en poids d'une composition minérale hydraulique selon l'une quelconque des revendications 1 à 7.

9. Produit cimentaire ou liant hydraulique selon la revendication 8, **caractérisé en ce que** le complément à la composition minérale hydraulique est choisi parmi le ciment Portland, les ciments alumineux, les plâtres naturels ou synthétiques, les phosphogypses et leurs mélanges.

10. Procédé de fabrication d'une composition minérale hydraulique selon l'une quelconque des revendications 1 à 7, **caractérisé en ce qu'**il comprend :
(a) l'obtention d'un matériau capable de former une matrice à base de silicoaluminate de calcium et magnésium dans une proportion d'au moins 25%, de préférence d'au moins 30% en poids de la composition minérale hydraulique finale et contenant une quantité d'oxydes minéraux et, éventuellement d'halogènures minéraux, tels que définis à la revendication 1, suffisante ou insuffisante pour obtenir dans la composition minérale hydraulique finale une proportion d'au moins 5% en poids de la composition finale de ces oxydes minéraux et, éventuellement, halogénures minéraux ;
(b) l'ajout au matériau capable de former la matrice lorsque celui-ci a une teneur insuffisante en oxydes minéraux et halogénures minéraux éventuels d'un matériau additionnel contenant une quantité d'oxydes minéraux et, éventuellement, d'halogénures minéraux spécifiques, tels que définis à la revendication 1, suffisante pour obtenir dans la composition minérale hydraulique finale une proportion d'au moins 5% en poids de ces oxydes minéraux et, éventuellement halogénures minéraux ;
(c) la fusion du matériau de l'étape (a) lorsque celui-ci a une teneur suffisante en oxydes minéraux et éventuels halogénures minéraux ou du produit obtenu à l'étape (b) à une température de 1450°C à 1650°C, de préférence à une température d'au moins 1500°C et mieux d'au moins 1550°C dans une atmosphère réductrice ayant une pression partielle en oxygène 10⁻⁷≤ pO₂ ≤10⁻⁵ atmosphère, et
(d) la récupération de la composition minérale hydraulique finale.

11. Procédé selon la revendication 10, **caractérisé en ce que** le matériau capable de former une matrice à base de silicoaluminate de calcium et magnésium est choisi parmi les laitiers d'aciérie et les poussières de fours industriels et de centrales techniques.

12. Procédé selon la revendication 10 ou 11, **caractérisé en ce que** le rapport pondéral du carbone imbrûlé du matériau capable de forme la matrice et du matériau additionnel éventuel au carbone de l'agent réducteur rajouté pour obtenir l'atmosphère réductrice varie de 0,02 à 5.

13. Procédé selon l'une quelconque des revendications 10 à 12, **caractérisé en ce que** le matériau additionnel est choisi parmi les résidus de la sidérurgie, des centrales thermiques, des cimenteries et de l'industrie chimique.

## Claims

1. A hydraulic mineral composition **characterised in that** it comprises a vitreous or crystallised matrix based on calcium and magnesium silico-aluminates, accounting for at least 25%, and preferably at least 30% by weight of the composition, one or several specific mineral oxides and optionally one or several specific mineral halides selected from oxides and halides of Ti, V, Cr, Mn, Co, Ni, Cu, Pb, Ba, Sr, P, S, Na, K, Zr, Mo, Be, Tl, As, Sn and Cd accounting for at least 5% by weight of the composition, at most 31% by weight of alumina (Al₂O₃), less than 10% by weight of ferrite (calcium aluminoferrite) and less than 0.05%, preferably less than 0.01 % by weight of C based on the weight of the composition.

2. A hydraulic mineral composition according to claim 1, **characterised in that** it comprises, in % by weight based on the total weight of the composition:
- titanium oxide 0 to 10%, preferably 0.1 to 10%;
- vanadium oxide 0 to 0.5%, preferably 0.2 to 0.5%;
- chromium oxide 0 to 0.5%;
- manganese oxide 0 to 5%, preferably 0.5 to 5%;
- zinc oxide 0 to 2%, preferably 0.1 to 2%;
- cobalt oxide 0 to 0.05%, preferably 0.01 to 0.5%;
- nickel oxide 0 to 0.5%, preferably 0.01 to 0.5%;
- copper oxide 0 to 2%, preferably 0 to 1 to 2%;
- lead oxide 0 to 0.01 %, preferably 0.001 to 0.01 %;
- barium oxide 0 to 2%, preferably 0.1 to 2%;
- strontium oxide 0 to 2%, preferably 0.1 to 1 to 2%;
- phosphorus oxide 0 to 2%, preferably 0.1 to 2%;
- sulphur oxide 0 to 3%, preferably 0.2 to 3%;
- sodium oxide 0 to 10%, preferably 0.5 to 10%;
- potassium oxide 0 to 10%, preferably 0.5% to 10%;
- zirconium oxide 0 to 0.1 %, preferably 0.01 to 0.1 %;
- molybdenum oxide 0 to 0.1 %, preferably 0.01 to 0.1 %;
- thallium oxide 0 to 0.1 %, preferably 0.01 to 0.1 %;
- tin oxide 0 to 0.1 %, preferably 0.01 to 0.1 %;
- cadmium oxide 0 to 0.005%, preferably 0.0002 to 0.005%; and
- arsenic oxide 0 to 0.002%, preferably 0.0001 to 0.002%.

3. A hydraulic mineral composition according to claim 1 or 2, **characterised in that** the optional halides are selected from chlorides, fluorides and iodides.

4. A hydraulic mineral composition according to any one of claims 1 to 3, **characterised in that** the mineral oxides are chosen from sodium, potassium, chromium, nickel, cobalt, phosphorus, zinc, sulphur, titanium, barium, manganese and strontium oxides.

5. A hydraulic mineral composition according to any one of claims 1 to 4, **characterised in that** it comprises at least the following oxides: sulphur, titanium, barium, manganese, strontium and zinc oxides.

6. A hydraulic mineral composition according to any one of the preceding claims, **characterised in that** the matrix is a crystallised matrix and **in that** the specific mineral oxides and optional halides account for at most 7% of the total weight of the composition.

7. A hydraulic mineral composition according to any one of the preceding claims, **characterised in that** the matrix is crystallised and comprises, based on with the total weight of the matrix:
Mineralogical composition A
- dicalcium silicate (C2S) 5 to 35%, preferably 10 to 30%;
- monocalcium aluminate (CA) 20 to 60%, preferably 30 to 55%; and
- melilite (solid solution of gehlenite C2AS and akermanite C2MS2) 5 to 50%, preferably 10 to 40%; or
Mineralogical composition B,
- dicalcium silicate (C2S) 20 to 60%, preferably 20 to 50%;
- calcium aluminate (C12A7) 20 to 70%, preferably 20 to 60%; and
- calcium aluminate (C3A) 0 to 45%, preferably 0 to 40%.

8. A cementitious product or hydraulic binder, **characterised in that** it comprises up to 80% by weight based on the total weight of the product obtained, preferably up to 50% by weight of a hydraulic mineral composition according to any one of claims 1 to 7.

9. A cementitious product or hydraulic binder according to claim 8, **characterised in that** the complement to the hydraulic mineral composition is chosen from Portland cement, aluminous cements, natural and synthetic gypsum plasters, phosphogypsums and mixtures thereof.

10. A production method of a hydraulic mineral composition according to any one of claims 1 to 7, **characterised in that** it comprises:
(a) obtaining a material capable of forming a matrix based on calcium and magnesium silico-aluminates in a proportion of at least 25%, preferably of at least 30% by weight of the final hydraulic mineral composition and containing a quantity of mineral oxides and optionally mineral halides, as defined in claim 1, sufficient or insufficient for obtaining in the final hydraulic mineral composition a proportion of at least 5% by weight of the final composition of these mineral oxides and, optionally, mineral halides;
(b) the addition to the material capable of forming the matrix, when the latter has an insufficient content of mineral oxides and optional mineral halides of an additional material containing a quantity of specific mineral oxides and optionally mineral halides, as defined in claim 1, sufficient for obtaining in the final hydraulic mineral composition a proportion of at least 5% by weight of these mineral oxides and optionally mineral halides;
(c) melting the material of step (a) when the latter has a sufficient concent of mineral oxides and optional mineral halides or the product obtained at step (b) at a temperature of 1450°C to 1650°C, preferably at a temperature of at least 1500°C, and more preferably of at least 1550°C in a reducing atmosphere with a partial oxygen pressure of 10⁻⁷ ≤ pO₂ ≤ 10⁻⁵ atmospheres, and
(d) recovering the final hydraulic mineral composition.

11. A method according to claim 10, **characterised in that** the material capable of forming a matrix based on calcium and magnesium silico-aluminates is selected from steelworks slag and dust from industrial furnaces and power stations.

12. A method according to claim 10 or 11, **characterised in that** the proportion by weight of the unburnt carbon in the material capable of forming the matrix and the material added optionally compared with the carbon of the reducing agent added to obtain the reducing atmosphere ranges from 0.02 to 5.

13. A method according to any one of claims 10 to 12, **characterised in that** the additional material is selected from residues from steelworks, power stations, cement plants and the chemical industry.

## Patentansprüche

1. Mineralische hydraulische Zusammensetzung, **dadurch gekennzeichnet, dass** sie eine Matrix auf der Grundlage von glasartigen oder kristallisierten Calcium- und Magnesiumalumosilicaten, die wenigstens 25 Gew.-%, vorzugsweise wenigstens 30 Gew.-% der Zusammensetzung darstellen, ein oder mehrere mineralische Oxide und gegebenenfalls ein oder mehrere spezifische mineralische Halogenide, die ausgewählt sind aus den Oxiden und Halogeniden von Ti, V, Cr, Mn, Co, Ni, Cu, Pb, Ba, Sr, P, S, Na, K, Zr, Mo, Be, TI, As, Sn und Cd, die wenigstens 5 Gew.-% der Zusammensetzung darstellen, höchstens 31 Gew.-% Aluminiumoxid (Al₂O₃), weniger als 10 Gew.-% Ferrit (Calciumalumoferrit) und weniger als 0,05 Gew.-%, vorzugsweise weniger als 0,01 Gew.-% C, bezogen auf das Gewicht der Zusammensetzung, umfasst.

2. Mineralische hydraulische Zusammensetzung nach Anspruch 1, **dadurch gekennzeichnet, dass** sie in Gew.-%, bezogen auf das Gesamtgewicht der Zusammensetzung, Folgendes umfasst:
- Titanoxid 0 bis 10 %, vorzugsweise 0,1 bis 10 %,
- Vanadiumoxid 0 bis 0,5 %, vorzugsweise 0,2 bis 0,5 %,
- Chromoxid 0 bis 0,5 %,
- Manganoxid 0 bis 5 %, vorzugsweise 0,5 bis 5 %,
- Zinkoxid 0 bis 2 %, vorzugsweise 0,1 bis 2 %,
- Kobaltoxid 0 bis 0,05 %, vorzugsweise 0,01 bis 0,5 %,
- Nickeloxid 0 bis 0,5 %, vorzugsweise 0,01 bis 0,5 %,
- Kupferoxid 0 bis 2 %, vorzugsweise 0,1 bis 2 %,
- Bleioxid 0 bis 0,01 %, vorzugsweise 0,001 bis 0,01 %,
- Bariumoxid 0 bis 2 %, vorzugsweise 0,1 bis 2 %,
- Strontiumoxid 0 bis 2 %, vorzugsweise 0,1 bis 2 %,
- Phosphoroxid 0 bis 2 %, vorzugsweise 0,1 bis 2 %,
- Schwefeloxid 0 bis 3 %, vorzugsweise 0,2 bis 3 %,
- Natriumoxid 0 bis 10 %, vorzugsweise 0,5 bis 10 %,
- Kaliumoxid 0 bis 10 %, vorzugsweise 0,5 % bis 10 %,
- Zirkoniumoxid 0 bis 0,1 %, vorzugsweise 0,01 bis 0,1 %,
- Molybdänoxid 0 bis 0,1 %, vorzugsweise 0,01 bis 0,1 %,
- Thalliumoxid 0 bis 0,1 %, vorzugsweise 0,01 bis 0,1 %,
- Zinnoxid 0 bis 0,1 %, vorzugsweise 0,01 bis 0,1 %,
- Cadmiumoxid 0 bis 0,005 %, vorzugsweise 0,0002 bis 0,005 % und
- Arsenoxid 0 bis 0,002 %, vorzugsweise 0,0001 bis 0,002 %.

3. Mineralische hydraulische Zusammensetzung nach Anspruch 1 oder 2, **dadurch gekennzeichnet, dass** die möglichen Halogenide aus den Chloriden, Fluoriden und Iodiden ausgewählt sind.

4. Mineralische hydraulische Zusammensetzung nach einem der Ansprüche 1 bis 3, **dadurch gekennzeichnet, dass** die mineralischen Oxide aus Natrium-, Kalium-, Chrom-, Nickel-, Kobalt-, Phosphor-, Zink- Schwefel-, Titan-, Barium-, Mangan- und Strontiumoxiden ausgewählt sind.

5. Mineralische hydraulische Zusammensetzung nach einem der Ansprüche 1 bis 4, **dadurch gekennzeichnet, dass** sie gleichzeitig wenigstens Schwefel-, Titan-, Barium-, Mangan-, Strontium- und Zinkoxide enthält.

6. Mineralische hydraulische Zusammensetzung nach einem der vorhergehenden Ansprüche, **dadurch gekennzeichnet, dass** die Matrix eine kristallisierte Matrix ist und die mineralischen Oxide und die möglichen mineralischen Halogenide höchstens 7 Gew.-% der Zusammensetzung darstellen.

7. Mineralische hydraulische Zusammensetzung nach einem der vorhergehenden Ansprüche, **dadurch gekennzeichnet, dass** die Matrix kristallisiert ist und, bezogen auf das Gesamtgewicht der Matrix, Folgendes enthält:
mineralogische Zusammensetzung A,
- Dicalciumsilicat (C2S) 5 bis 35 %, vorzugsweise 10 bis 30 %,
- Monocalciumaluminat (CA) 20 bis 60 %, vorzugsweise 30 bis 55 %, und
- Melilith (feste Lösung von Gehelenit C2AS und Akermanit C2MS2) 5 bis 50 %, vorzugsweise 10 bis 40 %,
oder
mineralogische Zusammensetzung B,
- Dicalciumsilicat (C2S) 20 bis 60 %, vorzugsweise 20 bis 50 %,
- Calciumaluminat (C12A7) 20 bis 70 %, vorzugsweise 20 bis 60 %, und
- Calciumaluminat (C3A) 0 bis 45 %, vorzugsweise 0 bis 40 %.

8. Zementprodukt oder hydraulisches Bindemittel, **dadurch gekennzeichnet, dass** es bis zu 80 Gew.-%, bezogen auf das Gesamtgewicht des erhaltenen Produkts, vorzugsweise bis zu 50 Gew.-% einer mineralischen hydraulischen Zusammensetzung nach einem der Ansprüche 1 bis 7 enthält.

9. Zementprodukt oder hydraulisches Bindemittel nach Anspruch 8, **dadurch gekennzeichnet, dass** der Rest der mineralischen hydraulischen Zusammensetzung aus Portlandzement, den Tonerdezementen, den natürlichen oder synthetischen Gipsen, den Phosphogipsen und Mischungen davon ausgewählt ist.

10. Verfahren zur Herstellung einer mineralischen hydraulischen Zusammensetzung nach einem der Ansprüche 1 bis 7, **dadurch gekennzeichnet, dass** es Folgendes umfasst:
(a) Erhalt eines zur Bildung einer Matrix auf der Grundlage eines Calcium- und Magnesiumalumosilicats fähigen Materials in einem Anteil von wenigstens 25 Gew.-%, vorzugsweise wenigstens 30 Gew.-% der fertigen mineralischen hydraulischen Zusammensetzung und das eine Menge an mineralischen Oxiden und gegebenenfalls mineralischen Halogeniden enthält, die in Anspruch 1 definiert sind, die ausreichend oder unzureichend sind, um in der fertigen mineralischen hydraulischen Zusammensetzung einen Anteil von wenigstens 5 Gew.-% der fertigen Zusammensetzung an diesen mineralischen Oxiden und gegebenenfalls mineralischen Halogeniden zu erhalten,
(b) Zugabe zu dem zur Bildung der Matrix fähigen Material, wenn dieses einen unzureichenden Gehalt an mineralischen Oxiden und möglichen mineralischen Halogeniden hat, eines zusätzlichen Materials, das eine Menge an mineralischen Oxiden und gegebenenfalls spezifischen mineralischen Halogeniden enthält, die in Anspruch 1 definiert sind, die ausreichend ist, um in der fertigen mineralischen hydraulischen Zusammensetzung einen Anteil von wenigstens 5 Gew.-% dieser mineralischen Oxide und gegebenenfalls mineralischen Halogenide zu erhalten,
(c) Schmelzen des Materials von Schritt (a), wenn dieses einen ausreichenden Gehalt an mineralischen Oxiden und möglichen mineralischen Halogeniden hat, oder des in Schritt (b) erhaltenen Produkts auf eine Temperatur von 1450 °C bis 1650 °C, vorzugsweise auf eine Temperatur von mindestens 1500 °C und noch mehr bevorzugt mindestens 1550 °C in einer reduzierenden Atmosphäre mit einem Sauerstoff-Partialdruck von 10⁻⁷ ≤ pO₂ ≤ 10⁻⁵ Atmosphären und
(d) Isolieren der fertigen mineralischen hydraulischen Zusammensetzung.

11. Verfahren nach Anspruch 10, **dadurch gekennzeichnet, dass** das zur Bildung einer Matrix auf der Grundlage eines Calcium- und Magnesiumalumosilicats fähige Material aus den Stahlwerkschlacken und den Stäuben von Industrieöfen und technischen Kraftwerken ausgewählt ist.

12. Verfahren nach Anspruch 10 oder 11, **dadurch gekennzeichnet, dass** der Gewichtsanteil des unvollständig verbrannten Kohlenstoffs des zur Bildung der Matrix fähigen Materials und des möglichen zusätzlichen Materials an Kohlenstoff des Reduktionsmittels, das zugegeben wurde, um eine reduzierende Atmosphäre zu erhalten, von 0,02 bis 5 variiert.

13. Verfahren nach einem der Ansprüche 10 bis 12, **dadurch gekennzeichnet, dass** das zusätzliche Material aus den Rückständen der Eisen- und Stahlindustrie, Wärmekraftwerken, Zementwerken und der chemischen Industrie ausgewählt ist.
